# EUROPEAN PATENT APPLICATION

(11) **EP 4 498 318 A1**
(43) Date of publication of application: **29.01.2025**
(21) Application number: 22933275.4
(22) Date of filing: 22.03.2022
(51) Int. Cl.: G06T 7/00, G06T 7/10

(54) **IMAGE PROCESSING METHOD AND IMAGE PROCESSING DEVICE**

(71) Applicant: NIKON CORPORATION, Tokyo 140-8601 (JP)
(72) Inventor: TAMOTO, Ryo, Tokyo 140-8601 (JP); IWASA, Akio, Tokyo 140-8601 (JP); YOKOYAMA, Kaede, Tokyo 140-8601 (JP); MURAKAMI, Masataka, Tokyo 140-8601 (JP)
(74) Representative: Hoffmann Eitle
(86) International application number: PCT/JP2022/013246
(87) International publication number: WO 2023/181129

(57) **Abstract**

[Problem] To generate a plurality of ground-truth images for each structure from a labeled image.

[Means to Solve Problem] An image processing method comprises a labeled image acquisition step of acquiring a labeled image of biological samples including a plurality of structures that are labeled, a binarized image generation step of binarizing the labeled image to generate binarized images, and a ground-truth image acquisition step of inputting an unknown labeled image into a pre-trained model trained using the labeled image and the binarized images corresponding to the labeled image, thereby acquiring, as a ground-truth image, a binarized image in which the structures in the unknown labeled image appear plausible.

## Description

### Technical Field

The present invention relates to an image processing method and an image processing device.

### Background Art

Patent Literatures 1, 2 disclose neural network-assisted segmentation techniques for identifying nuclear and cytoplasmic objects.

### Citation List

### Patent Literature

[Patent Literature 1] U.S. Patent No. 6463425
[Patent Literature 2] Published Japanese Translation No. H11-515097 of PCT International Publication

### Summary of Invention

A first aspect of the invention is to provide an image processing method comprising: a labeled image acquisition step of acquiring a labeled image of biological samples including a plurality of structures that are labeled; a binarized image generation step of binarizing the labeled image to generate binarized images; and a ground-truth image acquisition step of inputting an unknown labeled image into a pre-trained model trained using pairs of the labeled image and the binarized image, thereby acquiring, as a ground-truth image, a binarized image in which the structures in the unknown labeled image appear plausible.

A second aspect of the invention is to provide an image processing method comprising: a fourth pre-trained model generation step of generating a fourth pre-trained model trained using pairs of a non-invasive observation image acquired from an aggregate of biological samples including a first structure, a second structure, and a third structure, each of which is a different structure, by a non-invasive observation technique, and a first ground-truth image, which is a binarized image in which the first structure of the biological samples appears plausible; a fifth pre-trained model generation step of generating a fifth pre-trained model trained using pairs of the non-invasive observation image and a second ground-truth image, which is a binarized image in which the second structure of the biological samples appears plausible; and a sixth pre-trained model generation step of generating a sixth pre-trained model trained using pairs of the non-invasive observation image and a third ground-truth image, which is a binarized image in which the third structure of the biological samples appears plausible.

A third aspect of the invention is to provide an image processing device comprising: a labeled image acquirer that acquires a labeled image of biological samples including a plurality of structures that are labeled; a binarized image generator that binarizes the labeled image to generate binarized images; and a ground-truth image acquirer that inputs an unknown labeled image into a pre-trained model trained using pairs of the labeled image and the binarized image, thereby acquiring, as a ground-truth image, a binarized image in which the structures in the unknown labeled image appear plausible.

A fourth aspect of the invention is to provide an image processing device comprising: a labeled image acquirer that acquires a labeled image by capturing an aggregate of biological samples including a first structure, a second structure, and a third structure, each of which is a different structure, with each structure being assigned with a different label; a binarized image generator that binarizes the labeled image and generates a first binarized image in which at least the first structure appears, a second binarized image in which at least the second structure appears, and a third binarized image in which at least the third structure appears; a first ground-truth image acquirer that inputs an unknown labeled image into a first pre-trained model trained using pairs of the labeled image and the first binarized image, thereby acquiring, as a first ground-truth image, a binarized image in which the first structure in the unknown labeled image appear plausible; a second ground-truth image acquirer that inputs an unknown labeled image into a second pre-trained model trained using pairs of the labeled image and the second binarized image, thereby acquiring, as a second ground-truth image, a binarized image in which the second structure in the unknown labeled image appear plausible; and a third ground-truth image acquirer that inputs an unknown labeled image into a third pre-trained model trained using pairs of the labeled image and the third binarized image, thereby acquiring, as a third ground-truth image, a binarized image in which the third structure in the unknown labeled image appear plausible.

A fifth aspect of the invention is to provide an image processing device comprising: a fourth pre-trained model generator that generates a fourth pre-trained model trained using pairs of a non-invasive observation image acquired from an aggregate of biological samples including a first structure, a second structure, and a third structure, each of which is a different structure, by a non-invasive observation technique, and a first ground-truth image, which is a binarized image in which the first structure of the biological samples appears plausible; a fifth pre-trained model generator that generates a fifth pre-trained model trained using pairs of the non-invasive observation image and a second ground-truth image, which is a binarized image in which the second structure of the biological samples appears plausible; and a sixth pre-trained model generator that generates a sixth pre-trained model trained using pairs of the non-invasive observation image and a third ground-truth image, which is a binarized image in which the third structure of the biological samples appears plausible.

### Brief Description of the Drawings

Fig. 1 is a block diagram showing a functional configuration example of an image processing device according to a first embodiment.
Fig. 2 is a diagram showing a hardware configuration example of the image processing device according to the first embodiment.
Fig. 3 is a flowchart showing an example of a flow of an overall process performed by the image processing device according to the first embodiment.
Fig. 4 is a diagram for describing an example of generating binarized images from a labeled image according to the first embodiment.
Fig. 5 is a diagram for describing an example of acquiring ground-truth images according to the first embodiment.
Fig. 6 is a diagram for describing an example of selecting a ground-truth image according to the first embodiment.
Fig. 7 is a flowchart showing an example of a process flow of generating a third binarized image according to the first embodiment.
Fig. 8 is a flowchart showing an example of a process flow of generating a first binarized image according to the first embodiment.
Fig. 9 is a diagram for describing an example of generating a first binarized image according to the first embodiment.
Fig. 10 is a flowchart showing an example of a process flow of generating a second binarized image according to the first embodiment.
Fig. 11 is a flowchart showing an example of a process flow of one-dimensional adaptive line enhancement according to the first embodiment.
Fig. 12 is a diagram for describing an example of a line enhancement process according to the first embodiment.
Fig. 13 is a block diagram showing a functional configuration example of an image processing device according to a second embodiment.
Fig. 14 is a flowchart showing an example of a flow of an overall process performed by the image processing device according to the second embodiment.
Fig. 15 is a diagram for describing an example of generating a segmentation image according to the second embodiment.
Fig. 16 is a flowchart showing an example of generating a segmentation image according to the second embodiment.
Fig. 17 is a flowchart showing an example of generating a segmentation image according to the second embodiment.

### Description of Embodiments

Hereinafter, embodiments of the present invention will be described, with reference to the drawings. In the drawings, scale is changed as necessary to illustrate the embodiments, such as by enlarging or by emphasizing a part, and thus, the embodiments may differ from the actual product in size and shape in some cases.

### First Embodiment

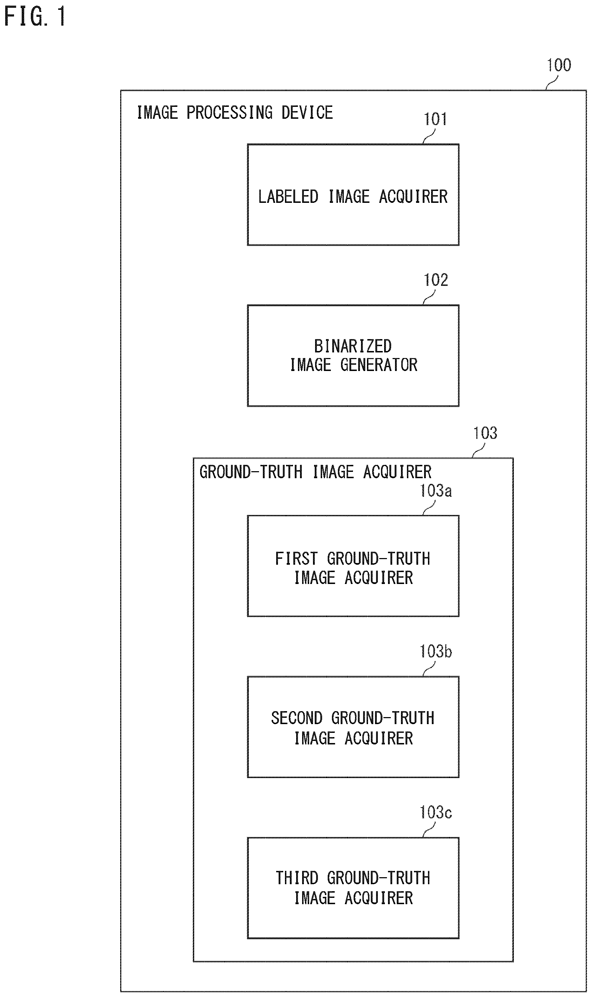

Hereunder, a first embodiment will be described. Fig. 1 is a block diagram showing a functional configuration example of an image processing device according to the first embodiment. As shown in Fig. 1, an image processing device 100 includes a labeled image acquirer 101, a binarized image generator 102, and a ground-truth image acquirer 103. Of these, the ground-truth image acquirer 103 has a first ground-truth image acquirer 103a, a second ground-truth image acquirer 103b, and a third ground-truth image acquirer 103c. The image processing device 100 performs a process of acquiring an image (referred to as "ground-truth image") in which each of cell structures (for example, cytoplasm, cell membrane, cell nucleus) plausibly appears from an image of a target object (for example, cell) of a biological sample captured by, for example, an imaging device of an optical microscope.

The image processing device 100 performs preprocessing (for example, annotations) for machine learning in instance segmentation of cells or the like. Conventionally, annotations were often performed by manually drawing each structure using fluorescent images, and to avoid an increase in the time required for manual work, it was common to draw all the structures contained in a single fluorescent image at once. In other words, conventional techniques avoided the process of separately drawing each structure within a single fluorescent image to create multiple ground-truth images (one for each structure) from a single fluorescent image, which would have made the annotation task time-consuming. The present embodiment describes the image processing device 100 that generates multiple ground-truth images (one for each structure) from a single labeled image (for example, a fluorescent image).

The labeled image acquirer 101 acquires a labeled image of biological samples including a plurality of structures that are labeled. Specifically, the labeled image acquirer 101 acquires a labeled image (labeling image) of an aggregate of biological samples (for example, cells) including a first structure (for example, cytoplasm), a second structure (for example, cell membrane), and a third structure (for example, cell nucleus), each of which is a different structure, with each structure being assigned with a different label (specific label or labeling). As described above, the labeled image is captured by an imaging device of an optical microscope or the like. The imaging device of the optical microscope captures an image of an aggregate including multiple cells. The imaging device of the optical microscope simultaneously captures a non-invasive observation image acquired by a non-invasive observation technique that does not involve labeling of viewing field, phase difference, or differential interference, in addition to the labeled image. During imaging, cells may overlap in some cases. The labeled image acquirer 101 acquires a labeled image from an optical microscope or an information processing device associated with the optical microscope via a network, or acquires a labeled image preliminarily stored in a memory storage device of the image processing device 100. The labeled image acquired by the image processing device 100 is not limited to a fluorescent image that is captured by means of so-called immunohistochemical technique, in which a cellular aggregate is stained with fluorescent substances, but may also be a Raman image or similar types. A combination of labeled images captured with different numerical apertures (NA) (images with different resolutions and focal depths) may be used. A labeled image acquired by means of confocal observation or echo planar observation may also be used.

The binarized image generator 102 binarizes a labeled image and generates a first binarized image in which at least the first structure appears, a second binarized image in which at least the second structure appears, and a third binarized image in which at least the third structure appears. Specifically, the binarized image generator 102 performs threshold comparisons, using pixel values of the labeled image acquired by the labeled image acquirer 101, and generates a first binarized image in which at least a cytoplasm appears, a second binarized image in which at least a cell membrane appears, and a third binarized image in which at least a cell nucleus appears. The binarization of the labeled image performed by the binarized image generator 102 is not limited to the processing described above, and the binarization of the labeled image may also be implemented by means of image conversion or image generation using deep learning. The processing performed by the binarized image generator 102 will be described in detail later.

The ground-truth image acquirer 103 inputs an unknown labeled image into a pre-trained model trained using pairs of a labeled image and a binarized image, thereby acquiring, as a ground-truth image, a binarized image in which the structure in the unknown labeled image appears plausible. The first ground-truth image acquirer 103a inputs an unknown labeled image into a first pre-trained model trained using pairs of a labeled image and a first binarized image, thereby acquiring, as a first ground-truth image, a binarized image in which the first structure in the unknown labeled image appears plausible. Specifically, the first ground-truth image acquirer 103a uses multiple pairs of a labeled image acquired by the labeled image acquirer 101 and a first binarized image generated by the binarized image generator 102 to train the first pre-trained model. The first pre-trained model is, for example, a U-Net model (U-Net algorithm) or the like. The first ground-truth image acquirer 103a inputs an unknown labeled image to the first pre-trained model and acquires an output binarized image (including the first binarized image). The first ground-truth image acquirer 103a selects a binarized image in which the cytoplasm in the unknown labeled image appears plausibly from the acquired binarized images, and designates the selected binarized image as a first ground-truth image. Regarding the ground-truth image acquirer 103, the methods by which the user acquires or selects the ground-truth image and the methods for automatically acquiring or selecting the ground-truth image, will be described later in detail.

The second ground-truth image acquirer 103b inputs an unknown labeled image into a second pre-trained model trained using pairs of a labeled image and a second binarized image, thereby acquiring, as a second ground-truth image, a binarized image in which the second structure in the unknown labeled image appears plausible. Specifically, the second ground-truth image acquirer 103b uses multiple pairs of a labeled image acquired by the labeled image acquirer 101 and a second binarized image generated by the binarized image generator 102 to train the second pre-trained model. The second pre-trained model is, for example, a U-Net model (U-Net algorithm) or the like. The second ground-truth image acquirer 103b inputs an unknown labeled image to the second pre-trained model and acquires an output binarized image (including the second binarized image). The second ground-truth image acquirer 103b selects a binarized image in which the cell membrane in the unknown labeled image appears plausibly from the acquired binarized images, and designates the selected binarized image as a second ground-truth image.

The third ground-truth image acquirer 103c inputs an unknown labeled image into a third pre-trained model trained using pairs of a labeled image and a third binarized image, thereby acquiring, as a third ground-truth image, a binarized image in which the third structure in the unknown labeled image appears plausible. Specifically, the third ground-truth image acquirer 103c uses multiple pairs of a labeled image acquired by the labeled image acquirer 101 and a third binarized image generated by the binarized image generator 102 to train the third pre-trained model. The third pre-trained model is, for example, a U-Net model (U-Net algorithm) or the like. The third ground-truth image acquirer 103c inputs an unknown labeled image to the third pre-trained model and acquires an output binarized image (including the third binarized image). The third ground-truth image acquirer 103c selects the binarized image in which the cell nucleus in the unknown labeled image appears plausibly from the acquired binarized images, and designates the selected binarized image as a third ground-truth image.

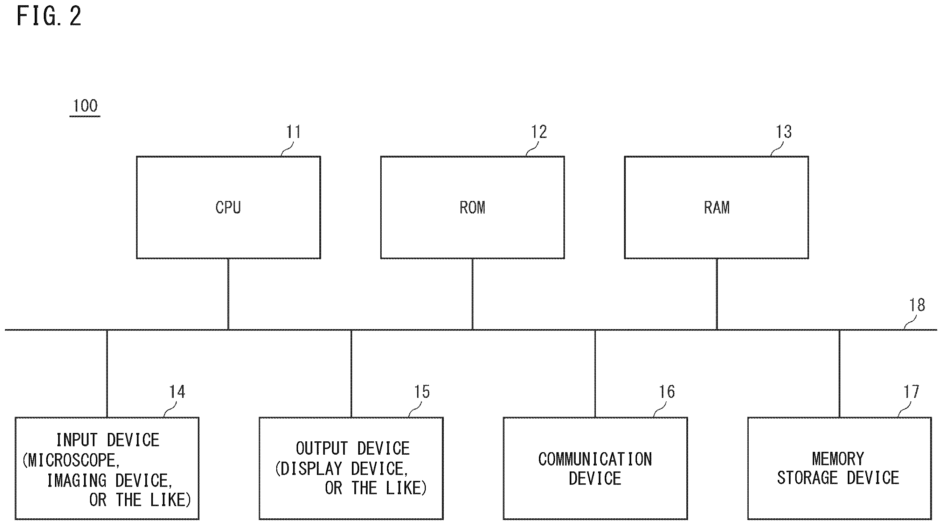

Fig. 2 is a diagram showing a hardware configuration example of the image processing device according to the first embodiment. As shown in Fig. 2, the image processing device 100 is implemented with, for example, a hardware configuration similar to that of a general-purpose computer. The image processing device 100 executes a predetermined image processing program to acquire a ground-truth image for each structure, such as cytoplasm, cell membrane, and cell nucleus, from a labeled image (for example, a fluorescent image). The hardware configuration of the image processing device 100 includes a CPU (Central Processing Unit) 11, a ROM (Read-Only Memory) 12, a RAM (Random Access Memory) 13, an input device 14, an output device 15, a communication device 16, and a memory storage device 17. The units mentioned above are connected by a data bus 18.

The CPU 11 is a processor that executes various processes, loads an image processing program stored in the memory storage device 17 or the like into the RAM 13, executes the program, and controls each unit to execute data input/output and data processing. The CPU 11 consists of one or more processors. The ROM 12 stores a start program for reading out a startup program from the memory storage device 17 or the like into the RAM 13. The RAM 13 serves as a working area for the CPU 11 to perform processing and stores various data.

The input device 14 is, for example, an input device such as a mouse or a keyboard, and receives information input through an operation as a signal and outputs it to the CPU 11. The input device 14 is also an optical microscope, imaging device, or the like mentioned above, and outputs image data of the captured objects (for example, cells) of a biological sample to the CPU 11 or other units. The output device 15 is, for example, a display device such as a liquid crystal display, and displays and outputs various information on the basis of signals from the CPU 11. The output device (display device) 15 displays labeled images (unknown labeled images), binarized images, ground-truth images, and so forth acquired by the image processing device 100, and is used by the user to observe these images and, along with the input device 14, to select ground-truth images. The communication device 16 transmits and receives information to and from external devices via a network. The memory storage device 17 stores the image processing program executed by the image processing device 100 and the operating system. The RAM 13 and the memory storage device 17 store labeled images (unknown labeled images) acquired by the image processing device 100, binarized images, and ground-truth images.

The image processing program executed by the image processing device 100 may be stored and provided on a computer-readable recording medium such as a CD-ROM or USB memory, in a format that can be installed or executed. The image processing program executed by the image processing device 100 may also be stored on a computer connected to a network such as the Internet and provided by allowing it to be downloaded via the network. The image processing program executed by the image processing device 100 may also be provided or distributed via a network. The image processing program executed by the image processing device 100 may also be pre-installed in the ROM 12 or similar medium and provided as such.

The image processing program at least includes a labeled image acquisition module that functions as the labeled image acquirer 101, a binarized image generation module that functions as the binarized image generator 102, and a ground-truth image acquisition module that functions as the ground-truth image acquirer 103. In the image processing device 100, the CPU 11, functioning as a processor, reads the image processing program from the memory storage device 17 and executes it, causing each module to be loaded onto the RAM 13, and the CPU 11 then functions as the labeled image acquirer 101, the binarized image generator 102, and the ground-truth image acquirer 103. It should be noted that some or all of these functions may be implemented by hardware other than a processor.

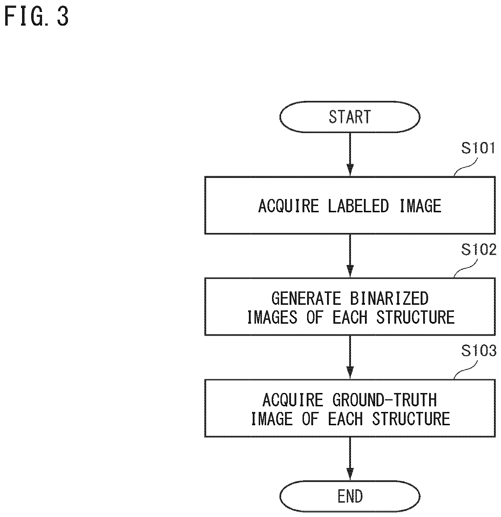

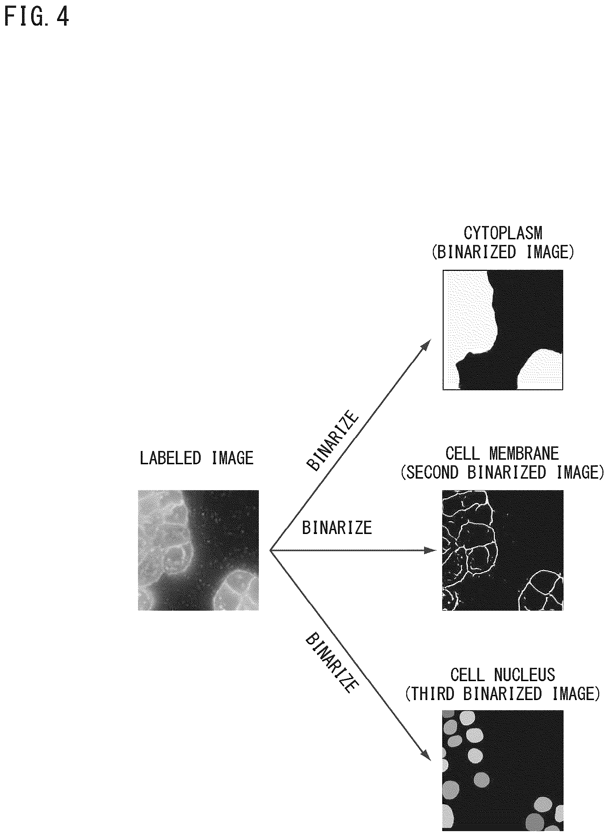

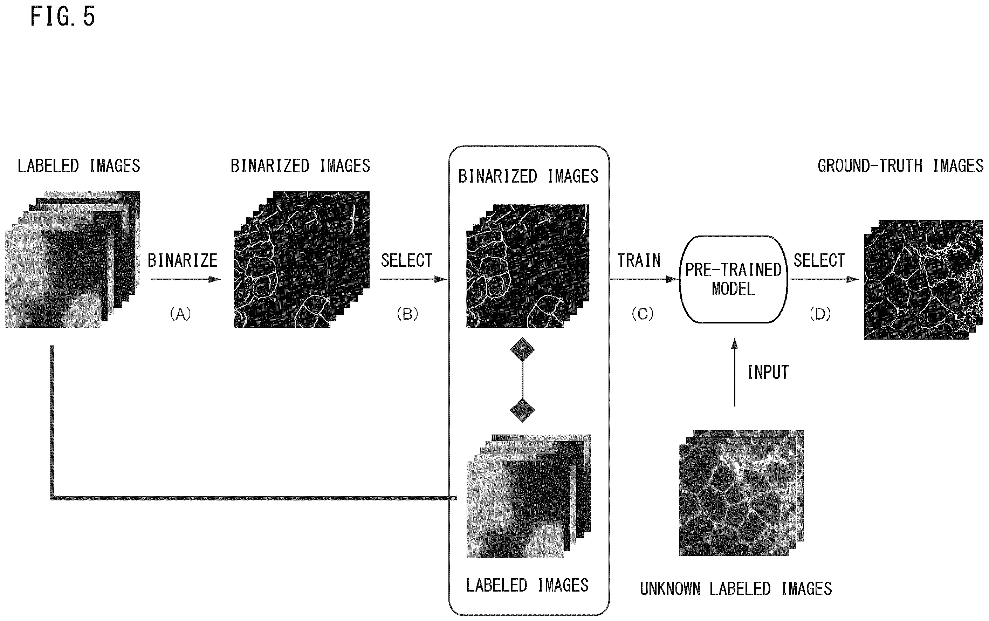

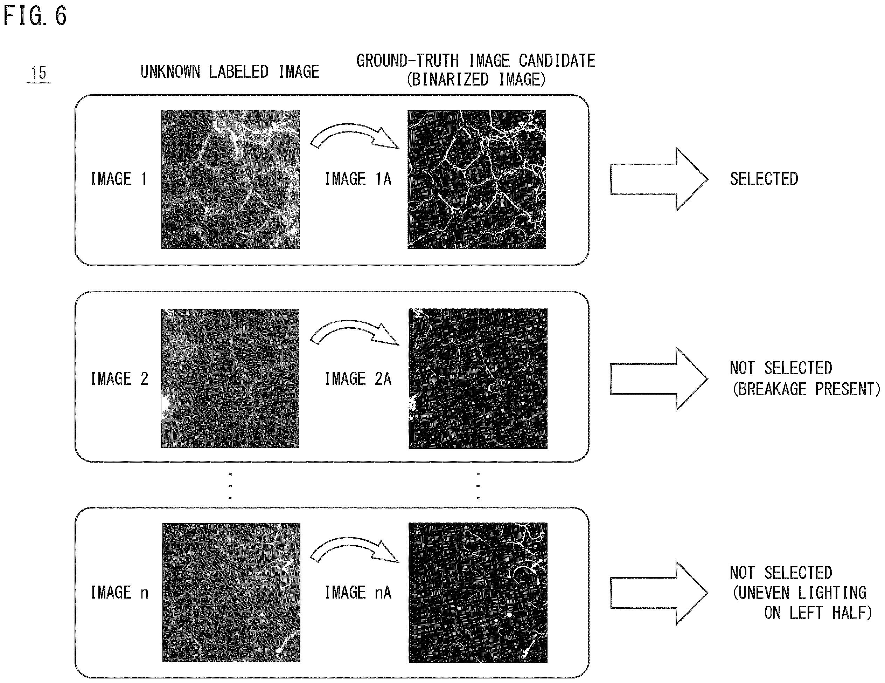

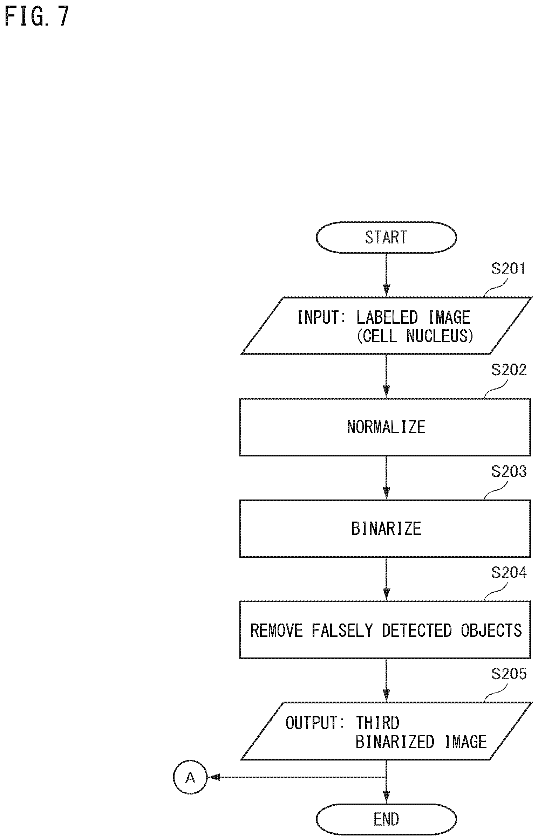

Fig. 3 is a flowchart showing an example of a flow of an overall process performed by the image processing device according to the first embodiment. In the description of Fig. 3, Fig. 4 to Fig. 6 will be used where appropriate. Fig. 4 is a diagram for describing an example of generating binarized images from a labeled image according to the first embodiment. Fig. 5 is a diagram for describing an example of acquiring ground-truth images according to the first embodiment. Fig. 6 is a diagram for describing an example of selecting a ground-truth image according to the first embodiment. Specific description will be made, with reference to Fig. 7 to Fig. 12. While Fig. 5 and Fig. 6 provide examples of ground-truth images for cell membranes, similar processing is also applied to cytoplasms and cell nuclei.

### Overall Processing Flow of Image Processing Device

As shown in Fig. 3, the labeled image acquirer 101 acquires a labeled image (Step S101). Specifically, the labeled image acquirer 101 acquires a labeled image of a cellular aggregate including structures such as cytoplasm, cell membrane, and cell nucleus, with each structure being assigned with a different label. The labeled image acquirer 101 acquires a labeled image obtained through imaging of the optical microscope, for example.

The binarized image generator 102 generates a binarized image of each structure (Step S102). Specifically, as shown in Fig. 4 or Fig. 5 (A), the binarized image generator 102 performs threshold comparisons, using pixel values of the labeled image acquired by the labeled image acquirer 101, and generates a first binarized image in which at least the cytoplasm appears, a second binarized image in which at least the cell membrane appears, and a third binarized image in which at least the cell nucleus appears. The threshold value used to generate a binarized image of each structure may be different for each structure. Here, as shown in Fig. 5 (B), the user may perform a selection operation to carefully select a first binarized image, a second binarized image, and a third binarized image from the first binarized images, second binarized images, and third binarized images generated by the binarized image generator 102, excluding images in which the structure is falsely detected or not detected. The binarized images generated by the binarized image generator 102 serve as rough ground-truth images compared to the ground-truth images acquired by the ground-truth image acquirer 103. Such rough ground-truth images may, for example, have errors or missed detections of cell membranes or similar structures. Since learning is limited for parts of cell membranes with errors or missed detections, the images will still approach the ground-truth image to some extent, even if the selection operation is not performed. However, as the number of rough ground-truth images with errors or missed detections increases, learning efficiency may decline. Therefore, the user may choose to perform a selection operation to carefully select the rough ground-truth images.

The ground-truth image acquirer 103 acquires a ground-truth image of each structure (Step S103). Specifically, as shown in Fig. 5 (C), the second ground-truth image acquirer 103b uses multiple pairs of a labeled image (for example, cell membrane) acquired by the labeled image acquirer 101 and a second binarized image (the binarized image of cell membrane shown in Fig. 4) generated by the binarized image generator 102 to train a pre-trained model (for example, the second pre-trained model). Then, as shown in Fig. 5 (D), the second ground-truth image acquirer 103b inputs an unknown labeled image acquired by the labeled image acquirer 101 to the pre-trained model (for example, the second pre-trained model), thereby acquiring, as a ground-truth image (for example, a second ground-truth image), a binarized image in which the structure (for example, cell membrane) in the unknown labeled image appears plausible. The image processing device 100 may further train the pre-trained model by training it with the selected ground-truth image and the labeled image corresponding to the ground-truth image.

Here, Fig. 6 will be used to describe a case where the user selects a ground-truth image. Fig. 6 describes an example of a procedure for determining a ground-truth image of a cell membrane. As shown in Fig. 6, the user uses the input device 14 to select the pair with high image quality from a pair of unknown labeled images 1 to n and a pair of ground-truth image candidates (binarized images) 1A to nA displayed on the output device (display device) 15. For example, the pair of the unknown labeled image 1 and the ground-truth image candidate 1A are images of high quality. The pair of the unknown labeled image 2 and the ground-truth image candidate 2A contain several broken portions (discontinuities) in the cell membrane images, making them low quality images. The pair of the unknown labeled image n and the ground-truth image candidate nA contain uneven lighting in the left half of the images, making them low quality images. The ground-truth image acquirer 103 includes the input device 14 and the output device (display device) 15, and the best pair is selected using a mouse or the like from among multiple "pairs of the unknown labeled images 1 to n and the ground-truth image candidates 1A to nA" displayed on the output device (display device) 15.

Next, the method of automatically selecting ground-truth images using the ground-truth image acquirer 103 will be described. As shown in Fig. 5 (D), the ground-truth image acquirer 103 inputs unknown labeled images acquired by the labeled image acquirer 101 into the pre-trained model, and automatically selects binarized images in which the structure in the input unknown labeled images appears plausibly.

### Automatic Selection Method 1: Image Processing - Rule-Based Method

In this automatic selection of binarized images, a binarized image is selected as a ground-truth image if the range of luminance values in the histogram, on the basis of the contrast and luminance values of the binarized image, exceeds a predetermined threshold value. The ground-truth image is selected by comparing feature quantities such as the area and shape, the thinness of lines, and the degree of thin-line break of the structures extracted from the binarized image, against index feature quantities, using predetermined criteria. Also, by combining these features, an indicator of "ground-truth image likelihood" is created, and the ground-truth image is selected on the basis of this indicator.

Automatic Selection Method 2: Learning-Based Method A regression model is trained to take ground-truth image candidates as input and output an index value for the "ground-truth image likelihood". The output "ground-truth image likelihood" index value is then used to determine whether to accept or reject on the basis of a predetermined threshold value.

Automatic Selection Method 3: Learning-Based Method A two-class classification model is trained to take ground-truth image candidates and output either "accepted" or "rejected" as a ground-truth image. The classification results are then used to determine whether to accept or reject the candidates.

### Processing Flow of Generating Third Binarized Image of Cell Nucleus

Fig. 7 is a flowchart showing an example of a process flow of generating a third binarized image (for example, cell nucleus) according to the first embodiment. As shown in Fig. 7, the binarized image generator 102 receives an input of a labeled image acquired by the labeled image acquirer 101 (Step S201), and performs normalization on the input labeled image (Step S202). In normalizing a labeled image, brightness and so forth are adjusted on the basis of the image information of the labeled image. Such normalization is similarly performed during the processes of generating a first binarized image and a second binarized image described later, and it is preferable that the same conditions be used when generating the binarized image of each structure.

Then, the binarized image generator 102 obtains an optimal threshold value by Otsu's binarization method or the like and performs binarization processing using the obtained threshold value to acquire a binarized image (Step S203). Next, the binarized image generator 102 removes falsely detected objects from the binarized image acquired through the binarization process (Step S204). For example, a falsely detected object refers to an object that is not suitably sized as a cell nucleus (for example, too large or too small). Specifically, the binarized image generator 102 performs a process on the basis of the size information of objects contained in the acquired binarized image to leave only objects that fall within a size range corresponding to a cell nucleus, thereby removing other objects as falsely detected objects. As a result, the binarized image generator 102 outputs a third binarized image (Step S205).

### Processing Flow of Generating First Binarized Image of Cytoplasm

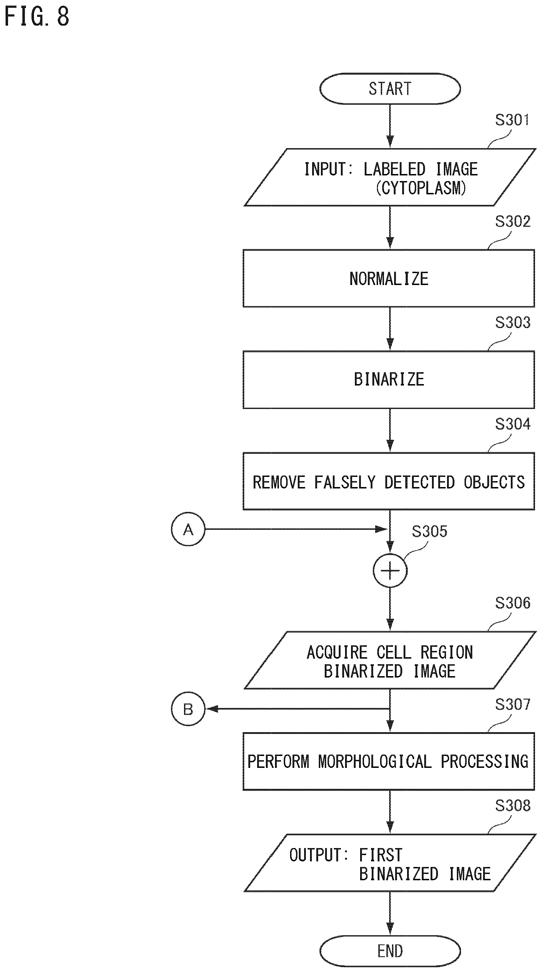

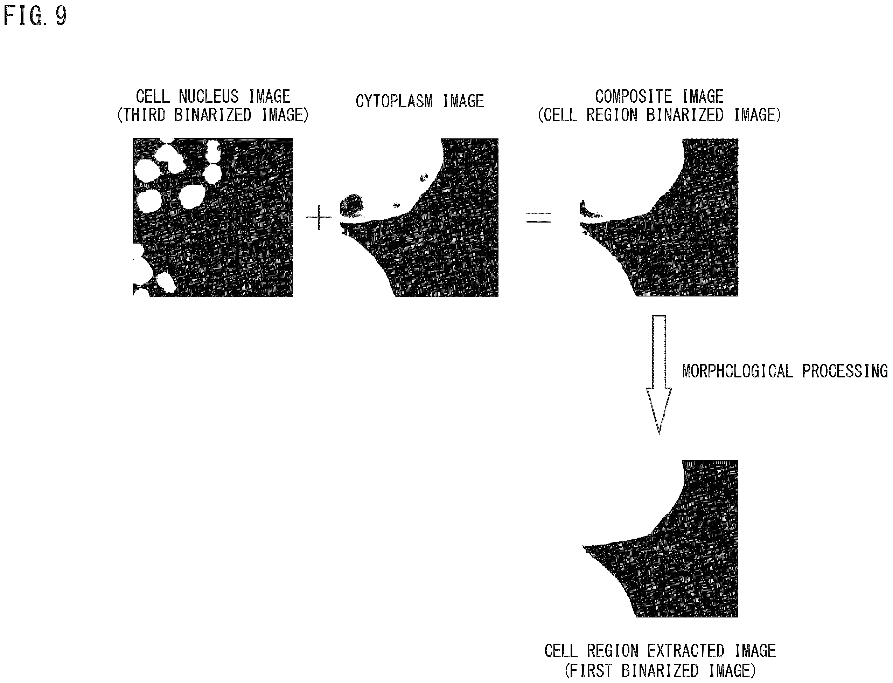

Fig. 8 is a flowchart showing an example of a process flow of generating a first binarized image according to the first embodiment. In the description of Fig. 8, Fig. 9 will be used where appropriate. Fig. 9 is a diagram for describing an example of generating a first binarized image according to the first embodiment. As shown in Fig. 8, the binarized image generator 102 receives an input of a labeled image acquired by the labeled image acquirer 101 (Step S301), and performs normalization on the input labeled image (Step S302). The normalization of the labeled image is similar to the normalization performed in the process of generating a third binarized image described above.

Then, the binarized image generator 102 obtains an optimal threshold value by Otsu's binarization method or the like and performs binarization processing using the obtained threshold value to acquire a binarized image (Step S303). Next, the binarized image generator 102 removes falsely detected objects from the binarized image acquired through the binarization process (Step S304). For example, a falsely detected object refers to an object that is not suitably sized as a cytoplasm (for example, too large or too small). Specifically, the binarized image generator 102 performs a process on the basis of the size information of objects contained in the acquired binarized image to leave only objects that fall within a size range corresponding to a cytoplasm, thereby removing other objects as falsely detected objects.

Then, the binarized image generator 102 combines the binarized image after removing falsely detected objects with the third binarized image (the binarized image corresponding to the cell nucleus) (Step S305) to acquire a cell region binarized image, which is a binarized image corresponding to a cell region (Step S306). Then, the binarized image generator 102 performs morphological processing or the like on the cell region binarized image (Step S307). As a result, the binarized image generator 102 outputs a first binarized image (Step S308).

Specifically, as shown in Fig. 9, the binarized image generator 102 combines the binarized image (cytoplasm image) after removing falsely detected objects with the third binarized image (cell nucleus image) to acquire a composite image (cell region binarized image). Then, the binarized image generator 102 performs morphology processing on the composite image (cell region binarized image) and outputs a first binarized image (cell region extracted image). In other words, after removing the falsely detected objects, the binarized image (cytoplasm image) is combined to represent the area where cell nucleus appears as part of the cytoplasm, and further, morphological processing is performed to remove (fill in) the noise present inside the cytoplasm in the composite image.

### Processing Flow of Generating Second Binarized Image of Cell Membrane

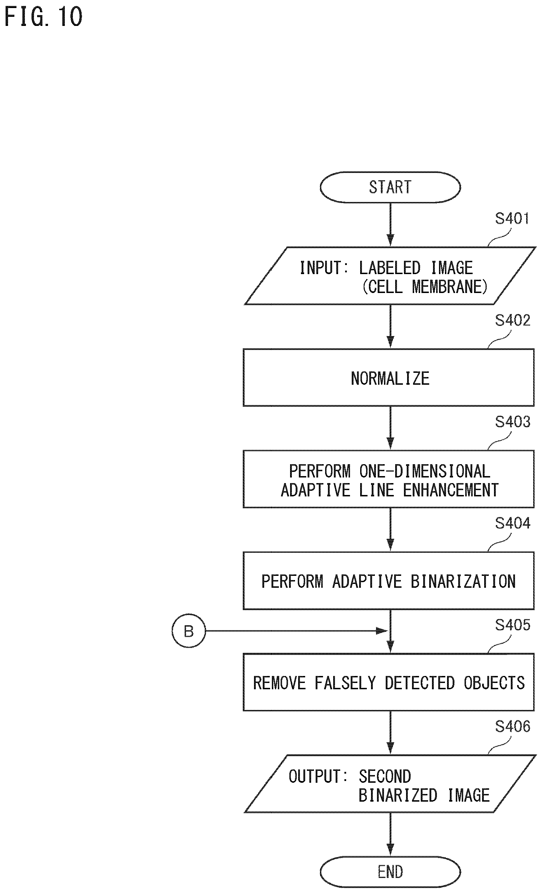

Fig. 10 is a flowchart showing an example of a process flow of generating a second binarized image (for example, cell membrane) according to the first embodiment. As shown in Fig. 10, the binarized image generator 102 receives an input of a labeled image acquired by the labeled image acquirer 101 (Step S401), and performs normalization on the input labeled image (Step S402). The normalization of the labeled image is similar to the normalization performed in the process of generating a first binarized image or a third binarized image described above.

Then, the binarized image generator 102 enhances thin lines in the normalized labeled image by one-dimensional adaptive line enhancement (Step S403), and after enhancing the thin lines, performs a binarization process to acquire a binarized image (Step S404). The one-dimensional adaptive line enhancement will be described in detail later. Next, the binarized image generator 102 removes the falsely detected areas of the cell membrane from the binarized image acquired through the binarization process, using the cell region binarized image (Step S405). As a result, the binarized image generator 102 outputs a second binarized image (Step S406). For example, the binarized image generator 102 outputs a second binarized image in which only the cell membrane remains, by removing the portions of the cell region binarized image from the binarized image acquired through the binarization process.

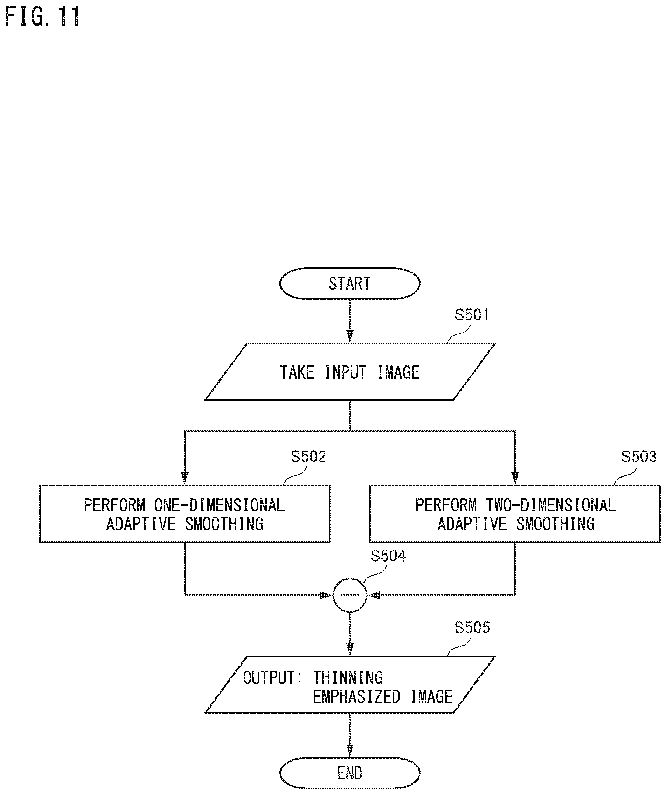

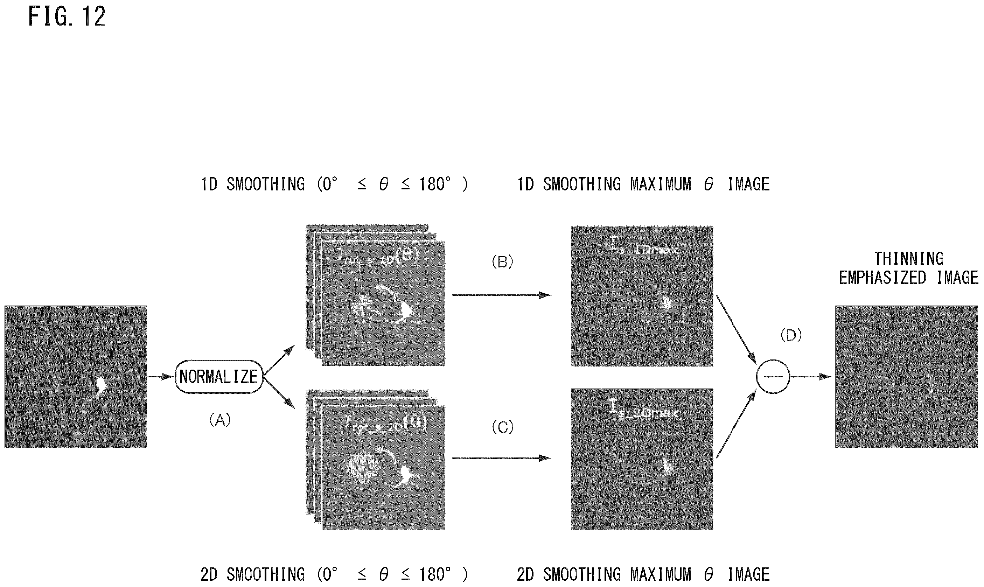

Fig. 11 is a flowchart showing an example of a process flow of one-dimensional adaptive line enhancement according to the first embodiment. The process of one-dimensional adaptive line enhancement corresponds to the process of Step S403 described above, and utilizes, for example, a neurite extraction algorithm capable of extracting only components having a linear structure. However, any technique can be used, as long as it can clearly binarize the target (for example, cell boundaries, linear structures). In the description of Fig. 11, Fig. 12 will be used where appropriate. Fig. 12 is a diagram for describing an example of a line enhancement process according to the first embodiment. The image processing method disclosed in International Publication No. WO2021/054089A1, for example, can be applied to the line enhancement image processing.

As shown in Fig. 11, the binarized image generator 102 uses, as an input image, the image in which normalization has been performed on the labeled image (see Fig. 12 (A)) (Step S501). Then, the binarized image generator 102 performs one-dimensional adaptive smoothing processing (see Fig. 12 (B)) on the input image (Step S502). For example, in the one-dimensional adaptive smoothing processing, the input image is rotated in 1° increments from 0° to 180° while smoothing processing is performed, and a process is performed to determine to which position (i, j) in the input image each pixel value of the smoothed image corresponds.

The binarized image generator 102 performs two-dimensional adaptive smoothing processing (see Fig. 12 (C)) on the input image (Step S503). For example, in the two-dimensional adaptive smoothing processing, upon suppressing the pixel values of dark areas in the input image to a luminance value "0", a luminance histogram is created, and then binarization processing is performed using a threshold value. Then, the binarized image generator 102 finds the difference between the image after the one-dimensional smoothing processing and the image after the two-dimensional smoothing processing (Step S504, see Fig. 12 (D)) to acquire an image with enhanced thin lines (and reduced noise) (Step S505).

### Second Embodiment

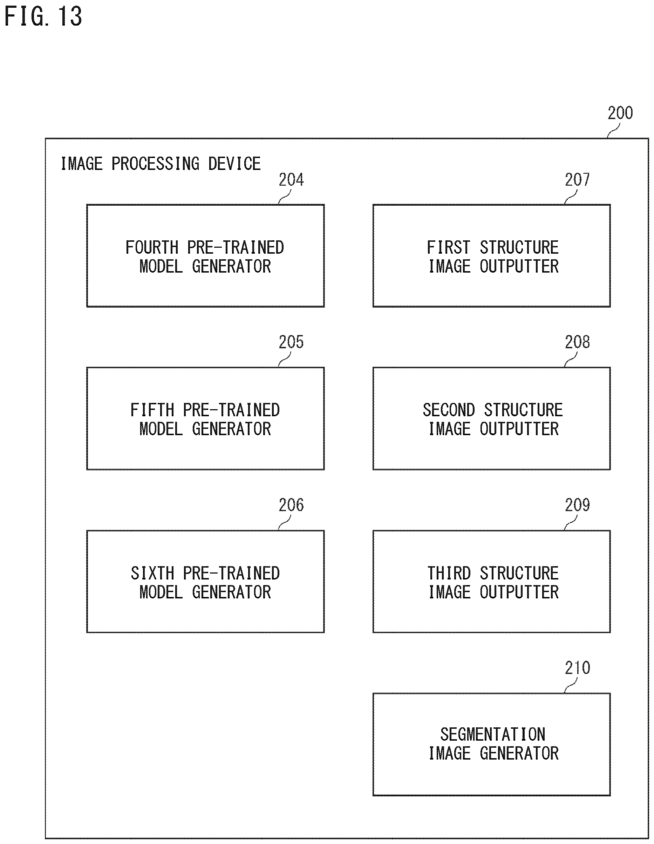

Hereunder, a second embodiment will be described, with reference to Fig. 13 to Fig. 17. The second embodiment describes an example of obtaining a cell segmentation image using ground-truth images obtained in the first embodiment or ground-truth images created by other automated methods (for example, created with another deep learning model). In the second embodiment, the same reference signs are given to configurations similar to those in the embodiment described above, and the descriptions thereof may be omitted or simplified in some cases. Fig. 13 is a block diagram showing a functional configuration example of an image processing device according to the second embodiment. As shown in Fig. 13, an image processing device 200 has a fourth pre-trained model generator 204, a fifth pre-trained model generator 205, and a sixth pre-trained model generator 206. The image processing device 200 also has a first structure image outputter 207, a second structure image outputter 208, a third structure image outputter 209, and a segmentation image generator 210.

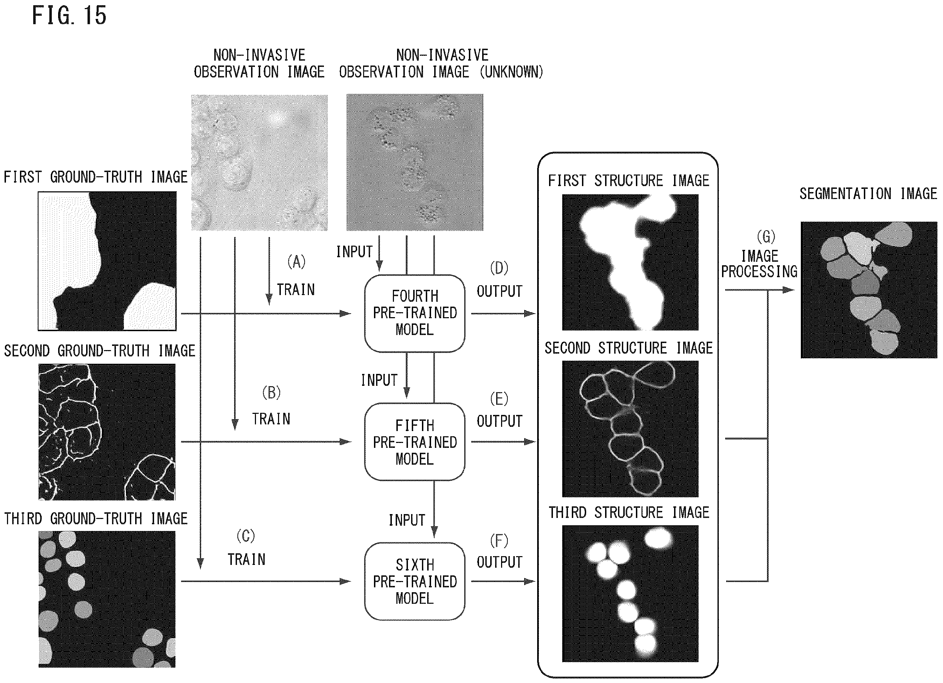

The fourth pre-trained model generator 204 generates a fourth pre-trained model trained using pairs of a non-invasive observation image acquired from an aggregate of biological samples by a non-invasive observation technique, and a first ground-truth image. Specifically, the fourth pre-trained model generator 204 generates a fourth pre-trained model trained using multiple pairs of a non-invasive observation image acquired from a cellular aggregate including a cytoplasm, a cell membrane, and a cell nucleus, each of which is a different structure, by a non-invasive observation technique, and a first ground-truth image, which is a binarized image in which the first structure (cytoplasm) of the biological samples appears plausible. The fourth pre-trained model is, for example, a U-Net model (U-Net algorithm) or the like. As shown in Fig. 15, the fourth pre-trained model is a model trained with pairs of a non-invasive observation image and a first ground-truth image, and it outputs a first structure image by inputting an unknown non-invasive observation image. Here, the first ground-truth image is a ground-truth image corresponding to the acquired non-invasive observation image, and for example, it refers to the first ground-truth image acquired by the first ground-truth image acquirer 103a described in the first embodiment. The first ground-truth image may be created by other automated methods (for example, created with another deep learning model). The non-invasive observation image is captured for the same cell (in the same viewing field) by the imaging device of an optical microscope or the like at the same time as the ground-truth image is generated in the first embodiment, and it is acquired as a bright-field image or phase-contrast image as a labeled image of the cell is acquired. The fourth pre-trained model generator 204 acquires a non-invasive observation image via a network from the input device 14, such as an optical microscope or an information processing device associated with the optical microscope, or acquires a non-invasive observation image that has been pre-stored in a memory storage device of the image processing device 200.

The fifth pre-trained model generator 205 generates a fifth pre-trained model trained using pairs of a non-invasive observation image acquired from an aggregate of biological samples by a non-invasive observation technique, and a second ground-truth image. Specifically, as with the fourth pre-trained model generator 204, the fifth pre-trained model generator 205 generates a fifth pre-trained model trained using multiple pairs of a non-invasive observation image acquired by a non-invasive observation technique, and a second ground-truth image, which is a binarized image in which the second structure (cell membrane) of the biological samples appears plausible. As shown in Fig. 15, the fifth pre-trained model is a model trained with pairs of a non-invasive observation image and a second ground-truth image, and it outputs a second structure image by inputting an unknown non-invasive observation image. Here, the second ground-truth image is a ground-truth image corresponding to the acquired non-invasive observation image. The second ground-truth image may be a ground-truth image acquired by the second ground-truth image acquirer 103b described in the first embodiment, or may be a ground-truth image prepared preliminarily by the user using another technique.

The sixth pre-trained model generator 206 generates a sixth pre-trained model trained using pairs of a non-invasive observation image acquired from an aggregate of biological samples by a non-invasive observation technique, and a third ground-truth image. Specifically, as with the fourth pre-trained model generator 204 and the fifth pre-trained model generator 205, the sixth pre-trained model generator 206 generates a sixth pre-trained model trained using multiple pairs of a non-invasive observation image acquired by a non-invasive observation technique, and a third ground-truth image, which is a binarized image in which the third structure (cell nucleus) of the biological samples appears plausible. As shown in Fig. 15, the sixth pre-trained model is a model trained with pairs of a non-invasive observation image and a third ground-truth image, and it outputs a third structure image by inputting an unknown non-invasive observation image. Here, the third ground-truth image is a ground-truth image corresponding to the acquired non-invasive observation image. The third ground-truth image may be a ground-truth image acquired by the third ground-truth image acquirer 103c described in the first embodiment, or may be a ground-truth image prepared preliminarily by the user using another technique.

The first structure image outputter 207 inputs an unknown non-invasive observation image of an aggregate of biological samples different from the aggregate of biological samples mentioned above into the fourth pre-trained model, thereby outputting, as a first structure image, a binarized image in which the first structure in the unknown non-invasive observation image appears plausible. The fourth pre-trained model is a pre-trained model trained using multiple pairs of a ground-truth image of a cytoplasm corresponding to the labeled image (for example, first ground-truth image), and a non-invasive observation image corresponding to the labeled image. The first structure image outputter 207 inputs an unknown non-invasive observation image, which is another non-invasive observation image not corresponding to the labeled image or the non-invasive observation image, into such a fourth pre-trained model, and thereby outputs a ground-truth image (for example, first structure image) that corresponds to the unknown non-invasive observation image.

The second structure image outputter 208 inputs an unknown non-invasive observation image of an aggregate of biological samples different from the aggregate of biological samples mentioned above into the fifth pre-trained model, thereby outputting, as a second structure image, a binarized image in which the second structure in the unknown non-invasive observation image appears plausible. The fifth pre-trained model is a pre-trained model trained using multiple pairs of a ground-truth image of a cell membrane corresponding to the labeled image (for example, second ground-truth image), and a non-invasive observation image corresponding to the labeled image. The second structure image outputter 208 inputs an unknown non-invasive observation image, which is another non-invasive observation image not corresponding to the labeled image or the non-invasive observation image, into such a fifth pre-trained model, and thereby outputs a ground-truth image (for example, second structure image) that corresponds to the unknown non-invasive observation image.

The third structure image outputter 209 inputs an unknown non-invasive observation image of an aggregate of biological samples different from the aggregate of biological samples mentioned above into the sixth pre-trained model, thereby outputting, as a third structure image, a binarized image in which the third structure in the unknown non-invasive observation image appears plausible. The sixth pre-trained model is a pre-trained model trained using multiple pairs of a ground-truth image of a cell nucleus corresponding to the labeled image (for example, third ground-truth image), and a non-invasive observation image corresponding to the labeled image. The third structure image outputter 209 inputs an unknown non-invasive observation image, which is another non-invasive observation image not corresponding to the labeled image or the non-invasive observation image, into such a sixth pre-trained model, and thereby outputs a ground-truth image (for example, third structure image) that corresponds to the unknown non-invasive observation image.

The segmentation image generator 210 generates a segmentation image in which each biological sample of the aggregate contained in the unknown non-invasive observation image is visualized in a distinguishable manner on the basis of the first structure image, the second structure image, and the third structure image. Specifically, the segmentation image generator 210 acquires a first structure image output by the first structure image outputter 207, a second structure image output by the second structure image outputter 208, and a third structure image output by the third structure image outputter 209. The segmentation image generator 210 performs image processing on the acquired first structure image, second structure image, and third structure image, and generates a segmentation image in which each cell contained in the unknown non-invasive observation image is visualized in a distinguishable manner. For example, the segmentation image generator 210 finds the difference between the first structure image and the second structure image, determines the position of the cell nucleus from the third structure image, and then applies an image segmentation process such as watershed to thereby generate a segmentation image in which each cell in the unknown non-invasive observation image is appropriately separated. For example, the image segmentation process may be a thresholding method, a graph cuts method, an active contour method, Markov random fields, clustering techniques (such as Gaussian mixture model approximation, k-means clustering), or the like. The generated segmentation image can also be output and displayed on the output device 15 described above.

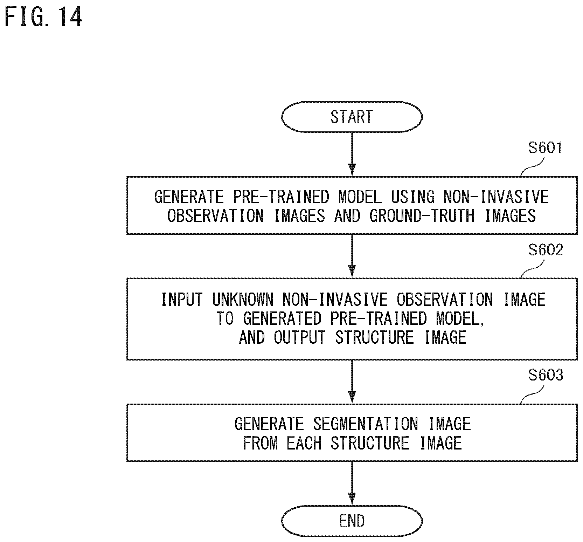

Fig. 14 is a flowchart showing an example of a flow of an overall process performed by the image processing device according to the second embodiment. In the description of Fig. 14, Fig. 15 will be used where appropriate. Fig. 15 is a diagram for describing an example of generating a segmentation image according to the second embodiment.

As shown in Fig. 14, the fourth pre-trained model generator 204, the fifth pre-trained model generator 205, and the sixth pre-trained model generator 206 generate pre-trained models using non-invasive observation images and ground-truth images (Step S601). Specifically, as shown in Fig. 15 (A), the fourth pre-trained model generator 204 generates a fourth pre-trained model trained using multiple pairs of a non-invasive observation image and a first ground-truth image in which the cytoplasm appears plausibly. Similarly, as shown in Fig. 15 (B), the fifth pre-trained model generator 204 generates a fifth pre-trained model trained using multiple pairs of a non-invasive observation image and a second ground-truth image in which the cell membrane appears plausibly. Similarly, as shown in Fig. 15 (C), the sixth pre-trained model generator 205 generates a sixth pre-trained model trained using multiple pairs of a non-invasive observation image and a third ground-truth image in which the cell nucleus appears plausibly.

The first structure image outputter 207, the second structure image outputter 208, and the third structure image outputter 209 input an unknown non-invasive observation image to the generated pre-trained models (fourth, fifth, and sixth pre-trained models) and output structure images (Step S602). Specifically, as shown in Fig. 15 (D), the first structure image outputter 207 inputs an unknown non-invasive observation image to the fourth pre-trained model generated by the fourth pre-trained model generator 204, thereby outputting, as a first structure image, a binarized image in which the cytoplasm in the unknown non-invasive observation image appears plausible. Similarly, as shown in Fig. 15 (E), the second structure image outputter 208 inputs the unknown non-invasive observation image to the fifth pre-trained model generated by the fifth pre-trained model generator 205, thereby outputting, as a second structure image, a binarized image in which the cell membrane in the unknown non-invasive observation image appears plausible. Similarly, as shown in Fig. 15 (F), the third structure image outputter 209 inputs the unknown non-invasive observation image to the sixth pre-trained model generated by the sixth pre-trained model generator 206, thereby outputting, as a third structure image, a binarized image in which the cell nucleus in the unknown non-invasive observation image appears plausible.

The segmentation image generator 210 generates a segmentation image from the respective structure images (Step S603). Specifically, as shown in Fig. 15 (G), the segmentation image generator 210 performs image processing using the first structure image output by the first structure image outputter 207, the second structure image output by the second structure image outputter 208, and the third structure image output by the third structure image outputter 209, and generates a segmentation image in which each cell contained in the unknown non-invasive observation image are visualized in a distinguishable manner. In the segmentation image, it is clear that a single cell region is distinctly distinguished.

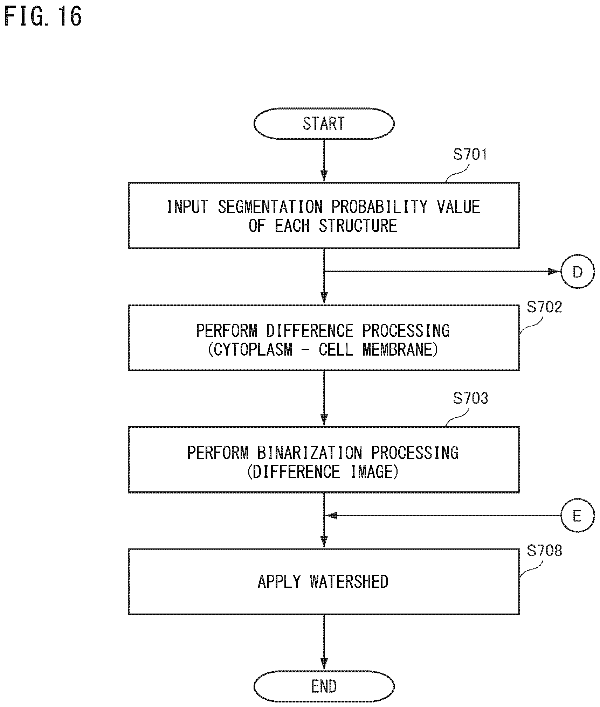

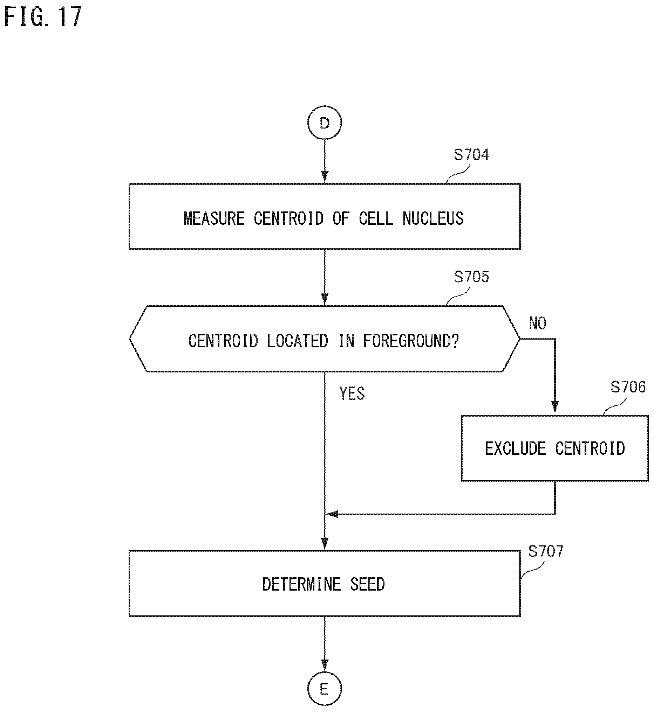

Fig. 16 and Fig. 17 are flowcharts showing examples of generating a segmentation image according to the second embodiment. As shown in Fig. 16 and Fig. 17, the image processing device 200 receives the segmentation probability value of each structure (Step S701). In the present embodiment, the segmentation probability value of the cytoplasm is a value that represents the likelihood that a region (for example, pixels) in the first structure image corresponds to the cytoplasm, and is expressed as a value between 0 and 1. Similarly, the segmentation probability value of the cell membrane is a value that represents the likelihood that a region in the second structure image corresponds to the cell membrane, and is expressed as a value between 0 and 1. Similarly, the segmentation probability value of the cell nucleus is a value that represents the likelihood that a region in the third structure image corresponds to the cell nucleus, and is expressed as a value between 0 and 1.

The image processing device 200 performs a difference process between the first structure image and the second structure image (Step S702), and performs a binarization process (Step S703). Specifically, the image processing device 200 uses the first structure image and the second structure image to remove the cell membrane from the cytoplasm (difference process) and performs the binarization process on the image in which the cell is emphasized, thereby acquiring a difference image, which is a binarized image in which the cell is emphasized.

The image processing device 200 measures the centroid of the cell nucleus in the third structure image (Step S704). Specifically, the image processing device 200 uses each structure image to calculate the centroid of the cell, the center of the object surrounding the cell, the centroid of the cell nucleus contained in the cell, the center of the object surrounding the cell nucleus contained in the cell, and the center of the object inscribed within the cell, and assumes the centroid (centroid position) of the cell nucleus in the third structure image, using at least one of these centroids and centers calculated. The centroid (centroid position) can serve as a seed during the application of a watershed, which is performed later.

The image processing device 200 determines whether the centroid is located in a foreground part (Step S705). The process of Step S705 is performed for all of the assumed centroids. Specifically, if the centroid is located in the foreground part represented as a cell (Step S705: YES), the image processing device 200 determines the centroid as a seed (for example, cell nucleus) (Step S707). On the other hand, if the centroid is not located in the foreground part represented as a cell (Step S705: NO), the image processing device 200 removes the centroid (Step S706). The removed centroid is not used as a seed (for example, cell nucleus) in the processing of Step S707.

The image processing device 200 applies a watershed (Step S708). Specifically, the image processing device 200 applies a watershed to the difference image, which is a binarized image emphasizing the cells, on the basis of the image in which the centroids have been determined, and acquires a segmentation image in which individual cells are visualized in a distinguishable manner. The image with the determined centroid is the image after the centroid has been removed on the basis of Step S706.

The embodiments described above use the structures of a cell as an example of biological samples. However, the invention is not limited to this example, and other examples such as angiogenesis can also be used. In the case of angiogenesis, the first structure corresponds to a cancer spheroid, the second structure corresponds to a blood vessel, and the third structure corresponds to a gel. In such a case, non-invasive observation images are advantageous for time-lapse observation of the cancer spheroid inducing angiogenesis. By learning each of the first to third structures from fluorescent observation images and non-invasive observation images, and then applying image processing after outputting the structure images, it is possible to more accurately perform segmentation on blood vessels and cancer.

The image processing devices 100, 200 include a computer, for example. The image processing devices 100, 200 read an image processing program stored in the ROM 12, and executes various processes in accordance with the read image processing program. This image processing program causes, for example, a computer to execute processes of:
acquiring a labeled image of biological samples including a plurality of structures that are labeled;
binarizing the labeled image to generate binarized images; and
inputting an unknown labeled image into a pre-trained model trained using pairs of the labeled image and the binarized image, thereby acquiring, as a ground-truth image, a binarized image in which the structures in the unknown labeled image appear plausible.

An image processing program causes, for example, a computer to execute processes of:
acquiring a labeled image by capturing an aggregate of biological samples including a first structure, a second structure, and a third structure, each of which is a different structure, with each structure being assigned with a different label;
binarizing the labeled image and generates a first binarized image in which at least the first structure appears, a second binarized image in which at least the second structure appears, and a third binarized image in which at least the third structure appears;
inputting an unknown labeled image into a first pre-trained model trained using pairs of the labeled image and the first binarized image, thereby acquiring, as a first ground-truth image, a binarized image in which the first structure in the unknown labeled image appear plausible;
inputting an unknown labeled image into a second pre-trained model trained using pairs of the labeled image and the second binarized image, thereby acquiring, as a second ground-truth image, a binarized image in which the second structure in the unknown labeled image appear plausible; and
inputting an unknown labeled image into a third pre-trained model trained using pairs of the labeled image and the third binarized image, thereby acquiring, as a third ground-truth image, a binarized image in which the third structure in the unknown labeled image appear plausible.

An image processing program causes, for example, a computer to execute processes of:
generating a fourth pre-trained model trained using pairs of a non-invasive observation image acquired from an aggregate of biological samples including a first structure, a second structure, and a third structure, each of which is a different structure, by a non-invasive observation technique, and a first ground-truth image,
which is a binarized image in which the first structure of the biological samples appears plausible;
generating a fifth pre-trained model trained using pairs of the non-invasive observation image and a second ground-truth image, which is a binarized image in which the second structure of the biological samples appears plausible; and
generating a sixth pre-trained model trained using pairs of the non-invasive observation image and a third ground-truth image, which is a binarized image in which the third structure of the biological samples appears plausible. These image processing programs may be recorded and provided on a computer-readable memory storage medium (for example, a non-transitory memory storage medium, or a non-transitory tangible medium).

In the second embodiment described above, by creating ground-truth images from labeled images of cells and so forth of biological samples using a deep learning model in the first embodiment, segmentation of cellular structures in unknown non-invasive observation images can be efficiently achieved. The technical scope of the invention is not limited to the aspects described in the above embodiments and so forth. One or more of the requirements described in the above embodiments and so forth may be omitted. The requirements described in the above embodiments may be combined where appropriate. Furthermore, the contents of all documents cited in the detailed description of the present invention are incorporated herein by reference to the extent permitted by law.

### Description of Reference Signs

100, 200: Image processing device
101: Labeled image acquirer
102: Binarized image generator
103: Ground-truth image acquirer
103a: First ground-truth image acquirer
103b: Second ground-truth image acquirer
103c: Third ground-truth image acquirer
204: Fourth pre-trained model generator
205: Fifth pre-trained model generator
206: Sixth pre-trained model generator
207: First structure image outputter
208: Second structure image outputter
209: Third structure image outputter
210: Segmentation image generator

## Claims

1. An image processing method comprising
a labeled image acquisition step of acquiring a labeled image of biological samples including a plurality of structures that are labeled,
a binarized image generation step of binarizing the labeled image to generate binarized images, and
a ground-truth image acquisition step of inputting an unknown labeled image into a pre-trained model trained using the labeled image and the binarized images corresponding to the labeled image, thereby acquiring, as a ground-truth image, a binarized image in which the structures in the unknown labeled image appear plausible.

2. The image processing method according to claim 1,
wherein in the labeled image acquisition step, the labeled image is acquired by capturing an aggregate of the biological samples including a first structure, a second structure, and a third structure, each of which is a different structure, with each structure being assigned with a different label,
wherein in the binarized image generation step, a first binarized image in which at least the first structure appears, a second binarized image in which at least the second structure appears, and a third binarized image in which at least the third structure appears are generated, and
wherein the ground-truth image acquisition step further comprises
a first ground-truth image acquisition step of inputting the unknown labeled image into a first pre-trained model trained using the labeled image and the first binarized image corresponding to the labeled image, thereby acquiring, as a first ground-truth image, a binarized image in which the first structure in the unknown labeled image appears plausible,
a second ground-truth image acquisition step of inputting the unknown labeled image into a second pre-trained model trained using the labeled image and the second binarized image corresponding to the labeled image, thereby acquiring, as a second ground-truth image, a binarized image in which the second structure in the unknown labeled image appears plausible, and
a third ground-truth image acquisition step of inputting the unknown labeled image into a third pre-trained model trained using the labeled image and the third binarized image corresponding to the labeled image, thereby acquiring, as a third ground-truth image, a binarized image in which the third structure in the unknown labeled image appears plausible.

3. The image processing method according to claim 2, further comprising
a fourth pre-trained model generation step of generating a fourth pre-trained model trained using a non-invasive observation image acquired from the aggregate of the biological samples by a non-invasive observation technique and the first ground-truth image corresponding to the non-invasive observation image,
a fifth pre-trained model generation step of generating a fifth pre-trained model trained using the non-invasive observation image and the second ground-truth image corresponding to the non-invasive observation image, and
a sixth pre-trained model generation step of generating a sixth pre-trained model trained using the non-invasive observation image and the third ground-truth image corresponding to the non-invasive observation image.

4. The image processing method according to claim 3, further comprising
a first structure image output step of inputting an unknown non-invasive observation image of an aggregate of biological samples different from the aggregate of the biological samples to the fourth pre-trained model, thereby outputting, as a first structure image, a binarized image in which the first structure in the unknown non-invasive observation image appears plausible,
a second structure image output step of inputting the unknown non-invasive observation image to the fifth pre-trained model, thereby outputting, as a second structure image, a binarized image in which the second structure in the unknown non-invasive observation image appears plausible,
a third structure image output step of inputting the unknown non-invasive observation image to the sixth pre-trained model, thereby outputting, as a third structure image, a binarized image in which the third structure in the unknown non-invasive observation image appears plausible, and
a segmentation image generation step of generating a segmentation image in which each biological sample of an aggregate contained in the unknown non-invasive observation image is visualized in a distinguishable manner on the basis of the first structure image, the second structure image, and the third structure image.

5. The image processing method according to any one of claims 1 to 4,
wherein, in the binarized image generation step, the labeled image is normalized and then binarized.

6. The image processing method according to any one of claims 1 to 5,
wherein, in the binarized image generation step, falsely detected objects are removed from an image in which the labeled image is binarized.

7. An image processing method comprising
a fourth pre-trained model generation step of generating a fourth pre-trained model trained using a non-invasive observation image acquired from an aggregate of biological samples including a first structure, a second structure, and a third structure, each of which is a different structure, by a non-invasive observation technique, and a first ground-truth image, which is a binarized image in which the first structure of the biological samples appears plausible,
a fifth pre-trained model generation step of generating a fifth pre-trained model trained using the non-invasive observation image and a second ground-truth image, which is a binarized image in which the second structure of the biological samples appears plausible, and
a sixth pre-trained model generation step of generating a sixth pre-trained model trained using the non-invasive observation image and a third ground-truth image, which is a binarized image in which the third structure of the biological samples appears plausible.

8. The image processing method according to claim 7, further comprising
a first structure image output step of inputting an unknown non-invasive observation image of an aggregate of biological samples different from the aggregate of the biological samples to the fourth pre-trained model, thereby outputting, as a first structure image, a binarized image in which the first structure in the unknown non-invasive observation image appears plausible,
a second structure image output step of inputting the unknown non-invasive observation image to the fifth pre-trained model, thereby outputting, as a second structure image, a binarized image in which the second structure in the unknown non-invasive observation image appears plausible,
a third structure image output step of inputting the unknown non-invasive observation image to the sixth pre-trained model, thereby outputting, as a third structure image, a binarized image in which the third structure in the unknown non-invasive observation image appears plausible, and
a segmentation image generation step of generating a segmentation image in which each biological sample of an aggregate contained in the unknown non-invasive observation image is visualized in a distinguishable manner on the basis of the first structure image, the second structure image, and the third structure image.

9. An image processing device comprising
a labeled image acquirer that acquires a labeled image of biological samples including a plurality of structures that are labeled,
a binarized image generator that binarizes the labeled image to generate binarized images, and
a ground-truth image acquirer that inputs an unknown labeled image into a pre-trained model trained using the labeled image and the binarized images corresponding to the labeled image, thereby acquiring, as a ground-truth image, a binarized image in which the structures in the unknown labeled image appear plausible.

10. An image processing device comprising
a labeled image acquirer that acquires a labeled image by capturing an aggregate of biological samples including a first structure, a second structure, and a third structure, each of which is a different structure, with each structure being assigned with a different label,
a binarized image generator that binarizes the labeled image and generates a first binarized image in which at least the first structure appears, a second binarized image in which at least the second structure appears, and a third binarized image in which at least the third structure appears,
a first ground-truth image acquirer that inputs an unknown labeled image into a first pre-trained model trained using the labeled image and the first binarized image corresponding to the labeled image, thereby acquiring, as a first ground-truth image, a binarized image in which the first structure in the unknown labeled image appears plausible,
a second ground-truth image acquirer that inputs the unknown labeled image into a second pre-trained model trained using the labeled image and the second binarized image corresponding to the labeled image, thereby acquiring, as a second ground-truth image, a binarized image in which the second structure in the unknown labeled image appears plausible, and
a third ground-truth image acquirer that inputs the unknown labeled image into a third pre-trained model trained using the labeled image and the third binarized image corresponding to the labeled image, thereby acquiring, as a third ground-truth image, a binarized image in which the third structure in the unknown labeled image appears plausible.

11. An image processing device comprising
a fourth pre-trained model generator that generates a fourth pre-trained model trained using a non-invasive observation image acquired from an aggregate of biological samples including a first structure, a second structure, and a third structure, each of which is a different structure, by a non-invasive observation technique, and a first ground-truth image, which is a binarized image in which the first structure of the biological samples appears plausible,
a fifth pre-trained model generator that generates a fifth pre-trained model trained using the non-invasive observation image and a second ground-truth image, which is a binarized image in which the second structure of the biological samples appears plausible, and
a sixth pre-trained model generator that generates a sixth pre-trained model trained using the non-invasive observation image and a third ground-truth image, which is a binarized image in which the third structure of the biological samples appears plausible.

12. The image processing device according to claim 11, further comprising
a first structure image outputter that inputs an unknown non-invasive observation image of an aggregate of biological samples different from the aggregate of the biological samples to the fourth pre-trained model, thereby outputting, as a first structure image, a binarized image in which the first structure in the unknown non-invasive observation image appears plausible,
a second structure image outputter that inputs the unknown non-invasive observation image to the fifth pre-trained model, thereby outputting, as a second structure image, a binarized image in which the second structure in the unknown non-invasive observation image appears plausible,
a third structure image outputter that inputs the unknown non-invasive observation image to the sixth pre-trained model, thereby outputting, as a third structure image, a binarized image in which the third structure in the unknown non-invasive observation image appears plausible, and
a segmentation image generator that generates a segmentation image in which each biological sample of an aggregate contained in the unknown non-invasive observation image is visualized in a distinguishable manner on the basis of the first structure image, the second structure image, and the third structure image.
